Europäisches Patentamt

European Patent Office

Office européen des brevets

(19)

(11) Veröffentlichungsnummer: **0 332 984 B1**

(12) **EUROPÄISCHE PATENTSCHRIFT**

(45) Veröffentlichungstag der Patentschrift: **19.01.94**

(51) Int. Cl.5: **C04B 35/18**, B28B 3/16

(21) Anmeldenummer: **89103949.7**

(22) Anmeldetag: **07.03.89**

(54) Formkörper aus Cordierit und Verfahren zu ihrer Herstellung.

(30) Priorität: **12.03.88 DE 3808348**

(43) Veröffentlichungstag der Anmeldung:
**20.09.89 Patentblatt 89/38**

(45) Bekanntmachung des Hinweises auf die
Patenterteilung:
**19.01.94 Patentblatt 94/03**

(84) Benannte Vertragsstaaten:
**DE ES FR GB**

(56) Entgegenhaltungen:
EP-A- 0 115 957
EP-A- 0 227 482
DE-A- 2 222 468
GB-A- 1 518 475
US-A- 3 885 977

KERAMISCHE ZEITSCHRIFT, Band 36, Nr. 10,
1984, Seiten 524-528; W. SCHULLE et al.:
"Beitrag zur rheologischen Charakterisierung bildsamer keramischer Massen"

(73) Patentinhaber: **Hoechst CeramTec Aktiengesellschaft**
**Wilhelmstrasse 14**
**D-95100 Selb(DE)**

(72) Erfinder: **Girmscheid, Paul**
**Nordring 19**
**D-8560 Lauf(DE)**
Erfinder: **Stuhler, Helmut**
**Tannenstrasse 1**
**D-8505 Röthenbach(DE)**
Erfinder: **Schulze, Gisbert**
**Keilerstrasse 13**
**D-8560 Lauf(DE)**

(74) Vertreter: **Isenbruck, Günter, Dr. et al**
**HOECHST AKTIENGESELLSCHAFT**
**Zentrale Patentabteilung**
**Gebäude F 821**
**D-65926 Frankturt am Main (DE)**

EP 0 332 984 B1

**Beschreibung**

Die vorliegende Erfindung betrifft Formkörper aus Cordierit mit besonders niedriger Wärmedehnung.

Es ist bekannt, daß Körper aus Cordierit eine sehr niedrige Wärmedehnung aufweisen und daher für Körper eingesetzt werden können bei denen hohe Wärmeschockfestigkeit, und gute Temperaturwechselbeständigkeit erforderlich ist, z.B. Autoabgaskatalysatoren. Ein Beispiel für die Herstellung eines Cordieritwabenkörpers durch Extrusion findet sich in der DE-OS 22 22 468. Es wird erwähnt, daß schichtartig strukturierte Aluminiumoxide und Spinelle und Mineralien wie Talcum und Tone zur Herstellung von Wabenkörpern besonders gut geeignet sind, und daß in solchen Materialien anscheinend unter den Bedingungen des Mischens und/oder der Extrusion die schwachen Bindungen zwischen den Oxidschichten leicht aufbrechen. Es wird ferner empfohlen, die plastische Zusammensetzung vor dem Extrudieren einer scherenden Mischung zu unterwerfen.

Nach der Lehre der DE-AS 24 50 071 wird zur Herstellung eines Cordierit-Formkörpers ein Ansatz, der Plättchenlehm oder entschichtbaren Schichtlehm enthält, mit Wasser und einem Extrudierhilfsmittel gründlich gemischt, anisostatisch zu einem Grünkörper geformt und dieser getrocknet und gebrannt.

Es hat sich gezeigt, daß keineswegs alle üblicherweise zur Herstellung von Cordierit verwendeten Rohmaterialien (Tone) nach dem angegebenen Verfahren zu Cordieritformkörpern mit einem Wärmeausdehnungskoeffizienten unter $1,1 \cdot 10^{-7}/°C$ (im Temperaturbereich von 25 bis 1000°C) verarbeitet werden können. Es wird zwar behauptet, daß geschichteter Lehm beim Mischen, d.h. bei inniger Durchmischung der Ansatzkomponenten, entschichtet würde. Es wird jedoch keine Methode angegeben, um den Grad der Entschichtung laufend verfolgen zu können. Auch fehlen Herkunftsangaben für die Rohstoffe.

Jedenfalls lassen sich mit herkömmlichen Verfahren, wie eigene Versuche gezeigt haben, die geforderten niedrigen Wärmeausdehnungskoeffizienten nur mit wenigen ausgewählten Ausgangsprodukten erreichen. Dies gilt insbesondere für Tone und Kaoline.

Eine weitere Voraussetzung zur Herstellung von Cordierit-Formkörpern mit niedriger Wärmedehnung besteht gemäß DE-AS 2450071 darin, daß die Formung des Grünkörpers anisostatisch erfolgt. Nur in diesem Fall soll es zu einem Gleiten der Lehmplättchen beim Formen und einer parallelen Anordnung der Lehm- und Talkumplättchen im Grünkörper kommen. Obwohl die Bedeutung des Entschichtungsvorganges richtig erkannt wurde, wird kein reproduzierbares Verfahren offenbart, mit dem sich eine Entschichtung regelmäßig und zuverlässig erreichen läßt.

In der Praxis werden zum Zerkleinern keramischer Ausgangskomponenten Naßtrommelmischer und zum Mischen der Komponenten Planetenrührwerke, Schraubenquirle und Siebkneter verwendet.

Der Erfindung liegt die Erkenntnis zugrunde, daß die Scherbeanspruchung bei diesen Aggregaten nicht ausreichend ist für eine optimale Zerlegung von Kaolin oder Ton in einzelne Plättchen, wie sie für eine Herstellung von Cordierit niedriger Wärmedehnung erforderlich ist.

Es wurde nun ein Verfahren zur Herstellung von Formkörpern aus Cordierit mit Wärmeausdehnungskoeffizienten in allen drei aufeinander senkrecht stehenden Raumrichtungen von maximal $1,1 \cdot 10^{-6}/°C$, gemessen im Intervall zwischen 20 und 1000°C, gefunden, wobei man einen Ansatz, der die Cordierit-Zusammensetzung ergibt und der Ton und/oder Kaolin sowie Speckstein oder Talk sowie Wasser und ein organisches Hilfsmittel für die Verformung der Zusammensetzung enthält, einer scherenden Mischung unterwirft, die Mischung zu einem Formkörper verformt und diesen bis zur Entstehung der Cordierit-Phase brennt. Dieses Verfahren ist dadurch, gekennzeichnet, daß man den Ansatz zwischen zwei Körper geringen Abstandes bringt, die sich gegeneinander bewegen und man gleichzeitig den Ansatz einer Scherbelastung aussetzt. Beispielsweise ist es möglich, den Ansatz zwischen zwei im wesentlichen parallele Glasplatten oder Stahlplatten zu bringen, die gegeneinander bewegt werden. Es ist vorteilhaft, wenn zwischen den beiden Körpern ein Druck, insbesondere Drucke von mindestens 2 bar, aufgebaut wird, da dann die Scherung schneller erfolgt. Der Abstand der beiden Körper beträgt im allgemeinen 0,1 bis 5, vorzugsweise 0,3 bis 3 mm.

Es ist günstig, wenn der Ansatz gerade soviel Wasser enthält, daß eine knetbare Masse entsteht (meist 10-20 Gew.-%). Eine solche Masse weist im allgemeinen Viskositäten von mindestens 50000 Pa·s auf.

Eine bevorzugte Ausgestaltung der erfindungsgemäßen scherenden Mischung besteht darin, daß man den Ansatz in den Spalt einbringt, der von zwei einander fast berührenden zylinderförmigen Walzen gebildet wird, die mit unterschiedlicher Geschwindigkeit rotieren. Je größer der Unterschied der Umfangsgeschwindigkeit in der Nähe des Spaltes, um so größer ist die Scherbelastung. Damit die Bearbeitungszeit der zu scherenden Masse nicht zu kurz ist, ist es vorteilhaft, die beiden Scherwalzen horizontal oder nahezu horizontal anzuordnen.

Die beiden Scherwalzen können die gleiche Umdrehungsrichtung aufweisen. Bevorzugt ist es jedoch, wenn beide Scherwalzen sich gegenläufig drehen (aber unterschiedliche Umdrehungsgeschwindigkeit aufweisen).

Die Scherwirkung wird verbessert, wenn die beiden Walzen Schernuten aufweisen, die vorzugsweise mit konstantem Steigungswinkel gewindeförmig den Mantel der Zylinder umlaufen. Es können auch mehrere Schernuten parallel zueinander angeordnet sein. Der Walzenabstand beträgt vorzugsweise weniger als 1,5 mm an der Aufgabeseite. Der Abstand an der Abnahmeseite soll vorzugsweise mindestens gleich dem (oder größer als der) Abstand an der Aufgabeseite sein. Die Nuten auf den Walzen bewerkstelligen den Transport der Masse über die Walzen und tragen mit zur Entschichtung bei.

Es ist bevorzugt, wenn die beiden Walzen des Walzenstuhls ohne Gangverzahnung nebeneinander liegen.

Zur eigentlichen Entschichtung kommt es am Walzenspalt durch die Scherung, die durch die unterschiedlichen Walzengeschwindigkeiten und den bewirkten Massestau verursacht wird. Dabei werden über die Walzenantriebe so große Kräfte aufgewendet, daß selbst kleinere Agglomerate von Kaolin, Ton oder Speckstein zerlegt werden, die nun mit den übrigen Versatzbestandteilen homogenisiert werden können. Plättchenförmige Mineralien, wie Ton, Kaolin oder Talk ordnen sich so an, daß die Plättchenebenen zueinander parallel und parallel zur Walzenoberfläche sind. Bis kurz vor dem Schervorgang weisen die Flächennormalen der plättchenförmigen Minerale zur Walzenachse; nach Abnahme der Masse von der Walze bilden sich Bänder, in denen ebenfalls überwiegend die plättchenförmigen Mineralpartikel parallel zueinander und parallel zur Bandoberfläche angeordnet sind.

Eine weitere Variante einer gründlichen scherenden Mischung besteht darin, daß man den Ansatz in den Spalt bringt, der von zwei runden Scheiben gebildet wird, die konzentrisch angeordnet sind und relativ zueinander rotieren. Vorzugsweise sind die Scheiben horizontal angeordnet. Als Scheiben-Material eignen sich harte Metalle wie Stahl. Besonders rasch verläuft die Scherung, wenn in mindestens eine der Scheiben eine oder mehrere Nuten eingefräst sind. Diese Nuten können symmetrisch zur Drehachse angeordnet sein. Ihre Form ist nicht kritisch; sie können geradlinig oder gekrümmt, z.B. in Spiralenform verlaufen. Vorteilhafterweise erstrecken sich die Nuten von der Zone nahe der Drehachse bis zum äußeren Umfang. Bei horizontaler Aufstellung wird der Ansatz durch eine Öffnung in der obersten Scheibe nahe der Drehachse eingefüllt und am Scheibenumfang abgenommen. Der Abstand der Scheiben soll etwa 0,5-10 mm betragen.

Es hat sich gezeigt, daß die Zerlegung der Plättchen nach dem erfindungsgemäßen Verfahren sehr schnell verläuft, und daß damit selbst Ansätze von schlecht entschichtbarem Kaolin, die üblicherweise nicht zufriedenstellend verarbeitet werden können, sich ohne weiteres zu Produkten mit niedrigem WAK verarbeiten lassen. Dabei ist ein Kneten in einem Mischer nicht erforderlich.

Die aus diesen Massen herstellbare polykristalline, gesinterte Cordieritkeramik enthält im allgemeinen auf analytischer Oxidbasis 48 bis 52 Gew.-% $SiO_2$, 34 bis 41 % $Al_2O_3$ und 12 bis 18 % MgO. Bevorzugt sind Gehalte von 48,0 bis 51,6 % $SiO_2$, 34,2 bis 39,5 % $Al_2O_3$ und 12,5 bis 15,5 % MgO.

Erstmals gelingt es mit dem erfindungsgemäßen Verfahren polykristalline gesinterte Cordieritkörper herzustellen, die nicht nur in einer sondern in allen drei (aufeinander senkrecht stehenden) Richtungen im Temperaturbereich von 20 bis 1000°C einen Wärmeausdehnungskoeffizienten von maximal $1,1 \cdot 10^{-6}/°C$ aufweisen.

Sowohl bei Einsatz schwer oder leicht entschichtbarer Ausgangsprodukte und einer gründlichen Scherung bis zur vollkommenen Desagglomerierung der Primärkristalle kann man Formkörper gewinnen, die in allen drei (senkrecht aufeinander stehenden) Richtungen Wärmeausdehnungskoeffizienten von 0,6 bis $1,1 \cdot 10^{-6}/°C$ im Temperaturbereich von 20 bis 1000°C aufweisen. Die Desagglomerierung kann unter dem Rasterelektronenmikroskop beobachtet werden.

Die Zusammensetzung des Versatzes (ohne Berücksichtigung der organischen Bestandteile und Wasser) spielt dabei keine entscheidende Rolle, sofern nur die oben angegebene analytische Oxidzusammensetzung eingehalten wird. Erwünscht ist ferner ein möglichst geringer Gehalt an Alkalien und Erdalkalien, insbesondere Gehalte unter 1,5 % (Summe $Na_2O + K_2O + CaO$).

Durch die Zwangshomogenisierung in dem oben erwähnten Scherwalzwerk gelingt es einerseits die Mineralteilchen in viele kleine Plättchen zu zerteilen und andererseits alle Bestandteile, so auch die organischen Bestandteile, die zur Plastifizierung dienen, d.h. dem Rohmaterial erhöhte plastische Verformbarkeit und dem Formkörper im getrockneten Zustand Festigkeit verleihen, gleichmäßig in der Masse zu verteilen. Als organische Plastifizierungs-Bestandteile kommen u.a. Celluloseäther, wie Methylcellulose, als Bindemittel u.a. gekochte Stärke in Frage. Durch die Entschichtung kommt es zu einer Vergrößerung der wirksamen Oberfläche und damit zu einem größeren Wasserbedarf. Nach der Zwangshomogenisierung ist die Fließspannung der Massen um ca. 10 % erhöht. Dies kann für die Bildsamkeit (vgl. W. Schulle, R. Bartusch, Keramische Zeitschrift 36 (1984) No. 10, S. 525) der Massen vorteilhaft sein. Es ist aber auch möglich, durch einen erhöhten Wasserzusatz die Viskosität wieder zu verringern.

Die Fließspannung und Bildsamkeit der behandelten Massen ist um so höher, je besser die Entschichtung der Ausgangsprodukte gelungen ist. Nach Behandlung auf einem Scherwalzwerk kann man Massen erhalten, die besonders zur Herstellung graziler, strukturierter Keramiken geeignet sind, beispielsweise zur Herstellung von Wabenkörpern durch Extrusion. Je geringer die Extrudiergeschwindigkeit bei sonst gleichen Bedingungen (Zusammensetzung, Extrudierdruck) ist, um so erfolgreicher wurde die Entschichtung der Ausgangskristallite durchgeführt. Wesentlich für den Erfolg des erfindungsgemäßen Verfahrens ist die Entschichtung bei der Zwangshomogenisierung. Der günstige Einfluß des erfindungsgemäßen Verfahrens bei der Herstellung von isostatisch gepreßten Zylindern geht aus Tabelle 4, der Einfluß bei der Extrusion von Wabenkörpern aus Tabelle 3 hervor.

Für das erfindungsgemäße Verfahren ist eine Ausrichtung der Teilchen bei der Formgebung des Grünkörpers zwar vorteilhaft, aber nicht unbedingt erforderlich. Wie Tabelle 4 zeigt, lassen sich auch isostatisch gepreßte Zylinder mit niedrigem WAK herstellen. Es ist überraschend, daß aus Ansätzen, die nach dem erfindungsgemäßen Verfahren hergestellt wurden, sich durch isostatisches Pressen Formteile mit niedrigem WAK herstellen lassen.

Für das isostatische Pressen setzt man Massen ein, die völlig deagglomeriert sind. Der Wassergehalt dieser Massen liegt i.a. zwischen 0 und 5 Gew.-%. Mit Hilfe des isostatischen Pressens lassen sich Formteile herstellen, deren WAK in allen drei Raumrichtungen im wesentlichen gleich (relative Abweichung vom Mittel der 3 Richtungen max 3 %) und im Bereich von $0{,}6 - 1{,}1{,}10^{-6}/^{\circ}C$ liegt (gemessen im Intervall von 20-1000 °C).

Keramische Massen, die erfindungsgemäß aufbereitet wurden, besitzen eine gesteigerte Bildsamkeit, so daß sich besonders solche Keramikteile vorteilhaft herstellen lassen, für die sonst die Gefahr der Deformation im Grünzustand besteht.

Die Erfindung wird durch die Beispiele näher erläutert.

**Beispiele**

**Beispiel 1**

a) Versuchsapparatur

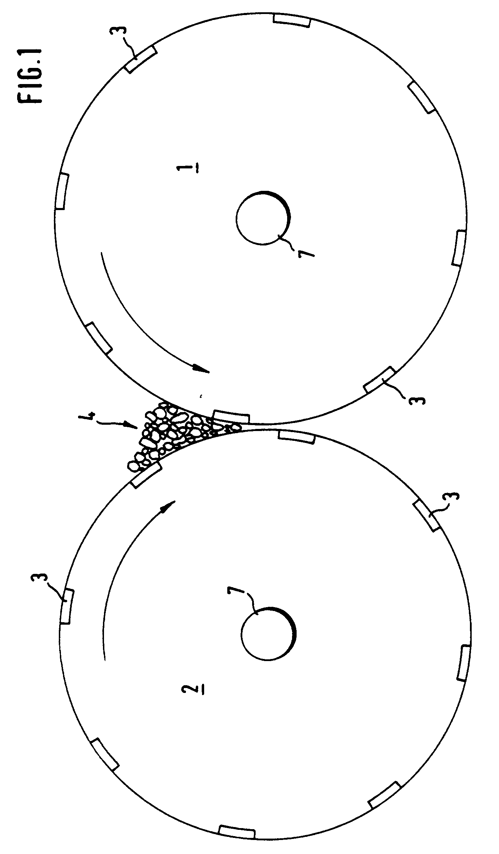

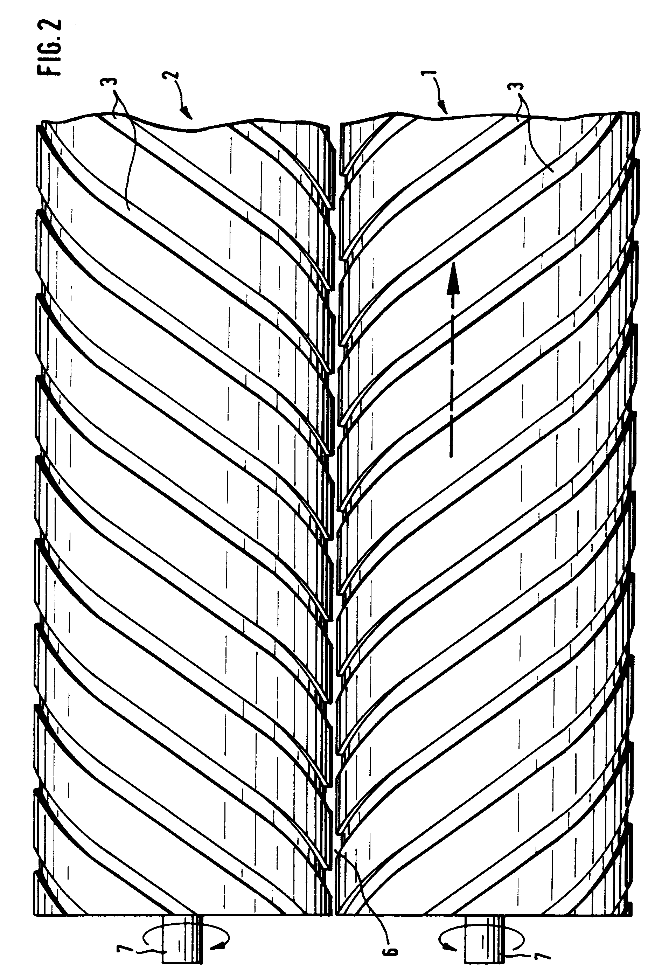

Verwendet wurde ein Walzenstuhl nach Fig. 1 und 2. Fig. 1 zeigt die Walzenanordnung im Querschnitt. Zwei nebeneinander horizontal angeordnete Scherwalzen (1,2) arbeiten gegenläufig mit unterschiedlicher Geschwindigkeit und transportieren dabei das Produkt (4) von der Aufgabenseite zur Abnahmeseite. Der Walzendurchmesser beträgt 100 mm, die Länge der Walzen 600 mm.

Auf der Walzenoberfläche sind Nuten (3) in Abständen von 3 cm eingefräst. Die Richtung der Nuten bildet in der Projektion in Richtung der Achse einen Winkel von etwa 45°. Die Tiefe der Nuten beträgt 2 mm, ihre Breite 8 mm. Der Abstand der beiden Walzen wurde an der Aufgabenseite auf 1,0 mm, an der Abnahmeseite auf 1,5 mm eingestellt. Die Lagerung der Achsen (7) ist nicht gezeichnet. Fig. 2 zeigt die beiden horizontalen Walzen von oben gesehen. Der Ansatz wird nahe einem Ende der Walzen in den Spalt, etwa bei Position (6) aufgegeben. Der Ansatz wandert dann in Pfeilrichtung.

b) Versuchsmassen

Aus Speckstein, Kaolin, Aluminiumoxid und Ton wurden durch Mischen keramische Massen erzeugt. Die Oxidzusammensetzung der verwendeten Rohstoffe (Angaben in Gewichtsprozent) findet sich in Tabelle 1. Aus Tabelle 2 geht hervor, aus welchen Mengen der einzelnen Rohstoffe die Versätze A bis H bestehen. Der verwendete Ton läßt sich sehr leicht entschichten. Der in Ansatz B verwendete Kaolin 1 läßt sich dagegen nur schwer entschichten.

In Tabelle 2a findet sich die berechnete Oxidzusammensetzung (in Gewichtsprozent) der aus den Versätzen gemäß Tabelle 2 gebrannten Keramikkörper.

c) Verformung zu Wabenkörpern

Die Massen von Tabelle 2 wurden in der Versuchsapparatur einmal entschichtet. Anschließend wurden sie mit Hilfe einer Kolbenpresse (180 bar) zu Wabenkörpern (Durchmesser 100 mm) extrudiert. Die Wabenkörper wurden getrocknet und 10 Stunden bei 1400 °C gebrannt. Anschließend wurden die WAK der Wabenkörper in Richtung Extrudierachse ermittelt. Diese WAK sind in Tabelle 3 ("nach") aufgeführt.

**Beispiel 2 (Vergleichsbeispiel)**

Die Massen gemäß Tabelle 2 wurden in einem Doppel-Z-Kneter mit der doppelten und dreifachen Knetzeit (bezogen auf die normale Aufbereitungszeit von 3 Stunden) gemischt und die Massen unter sonst gleichen Bedingungen wie im Beispiel 1c) zu Wabenkörpern verformt und gebrannt. Die WAK (in

EP 0 332 984 B1

Extrudierrichtung) wurden ebenfalls bestimmt und finden sich in Tabelle 3 ("vor").

Es zeigt sich, daß durch die erfindungsgemäße Aufarbeitung eine deutliche, wenn auch von der Natur der Proben abhängige Verbesserung der Wärmeausdehnungskoeffizienten erhalten wurde. Überraschend ist die relativ große Verbesserung des WAK-Wertes des Versatzes D mit hohem Anteil an leicht entschichtbarem Ton.

**Beispiel 3**

Die Massen von Tabelle 2 wurden in der Versuchsapparatur einmal entschichtet. Die entschichteten Massen (Feuchtegehalt 1 Gew.-%) wurden mit Hilfe einer isostatisch arbeitenden Presse bei einem Druck von 1200 bar isostatisch zu Zylindern (Durchmesser 7 cm, Länge 15 cm) verpreßt. Die Zylinder wurden getrocknet und bei 1420°C gebrannt. Die WAK der Probekörper (Temperaturbereich von 20 bis 1000°C) wurden in den drei Raum-Richtungen bestimmt. (Achsrichtung und zwei senkrecht zueinander stehenden Richtungen senkrecht zur Achsrichtung). Die gefundenen Werte finden sich in Tabelle 4 (Proben A* und B*).

**Beispiel 4 (Vergleichsbeispiel)**

Zum Vergleich mit Beispiel 3 wurden die Massen gemäß Beispiel 1b drei Stunden in einem Doppel-Z-Kneter gemischt und die Massen in gleicher Weise zu Probezylindern verarbeitet. Die ermittelten WAK finden sich in Tabelle 4. (Proben A und B).

Beim Vergleich der Werte in Tabellen 4 (A mit B und A* mit B*) erkennt man, daß auch beim isostatischen Verpressen, die erfindungsgemäße Aufarbeitung zu einer beträchtlichen Verbesserung der WAK führt.

**Beispiel 5**

Der Versatz E aus Tab. 2 wurde in der Versuchsapparatur von Beispiel 1 behandelt. Proben wurden an verschiedenen Stellen längs der Walzen entnommen, um den Einfluß der effektiven Walzenlänge auf die Eigenschaften der behandelten Massen zu untersuchen. Ferner wurden die Massen teilweise mehrmals über die Apparatur geschickt, um so die effektive Walzenlänge zu vergrößern. Es zeigte sich jedoch, daß bei einer Wiederholung der Behandlung (Walzenlänge 60 cm) die erhaltenen WAK sich nur noch geringfügig verbessern lassen.

Tabelle 1

| Rohstoffanalyse | | | | | |
|---|---|---|---|---|---|
| | $SiO_2$ | $Al_2O_3$ | $MgO$ | $CaO$ | $K_2O + Na_2O$ |
| Speckstein 1 | 60,4 | 0,1 | 32,2 | 0,2 | 0,02 |
| Speckstein 2 | 60,5 | 1,0 | 33,0 | 0,05 | 0,09 |
| Kaolin 1 | 45,0 | 39,0 | 0,05 | 0,03 | 0,15 |
| Kaolin 2 | 45,5 | 39,0 | 0,05 | 0,1 | 0,20 |
| Kaolin 3 | 47,1 | 37,7 | 0,22 | 0,07 | 1,12 |
| Ton | 46,3 | 35,4 | 0,22 | 0,70 | 0,10 |
| hydratisiertes Aluminiumoxid | 0,04 | 64,7 | - | - | 0,35 |
| Aluminiumoxid | 0,08 | 99,6 | - | 0,04 | 0,24 |
| Siliziumdioxid | 98,8 | 0,8 | - | 0,1 | 0,08 |

5

Tabelle 2

| Zusammensetzung in Gew.-% | | | | | | | | |
|---|---|---|---|---|---|---|---|---|
| | D | C | B | E | A | F | G | H |
| Speckstein 1 | 38,2 | 38,2 | 38,2 | 35,0 | 38,2 | - | 18,0 | 38,2 |
| Speckstein 2 | - | - | - | - | - | 37,0 | 20,0 | - |
| Kaolin 1 | 19,2 | 19,2 | 19,2 | 26,3 | 14,5 | 20,0 | 20,0 | 20,0 |
| Kaolin 2 | - | - | - | - | 9,6 | 20,0 | 20,0 | 20,0 |
| Kaolin 3 | - | 5,0 | 9,5 | - | 4,8 | - | - | - |
| Ton | 14,0 | 9,5 | 5,0 | 4,4 | 4,8 | 7,0 | 7,0 | 7,0 |
| hydratisiertes Aluminiumoxid | - | - | - | - | - | 16,0 | 15,0 | 15,0 |
| Aluminiumoxid | 20,0 | 20,0 | 20,0 | 27,4 | 20,0 | - | - | - |
| Siliziumdioxid | 7,7 | 8,0 | 8,4 | 7,3 | 8,1 | - | - | - |
| Celulloseether | 3,0 | 4,0 | 4,0 | 4,0 | 4,0 | 4,0 | 4,0 | 4,0 |
| Diglykolmonokokoat | 0,5 | 0,5 | 0,5 | 0,5 | 0,5 | 0,5 | 0,5 | 0,5 |
| Wasser | 29,5 | 29,5 | 29,5 | 29,0 | 29,5 | 29,0 | 29,0 | 29,5 |

## Tabelle 2a

## Berechnete Oxidzusammensetzung der Scherben (Gew.-%)

| | D | C | B | E |
|---|---|---|---|---|
| $Al_2O_3$ | 35.70 | 35.68 | 35.58 | 42.15 |
| $SiO_2$ | 50.39 | 50.52 | 50.68 | 45.43 |
| $MgO$ | 13.57 | 13.44 | 13.36 | 12.14 |
| $CaO$ | 0.21 | 0.18 | 0.15 | 0.13 |
| $(Na,K)_2O$ | 0.15 | 0.17 | 0.22 | 0.13 |

| | F | G | H | A |
|---|---|---|---|---|
| $Al_2O_3$ | 33.86 | 32.93 | 32.85 | 35.77 |
| $SiO_2$ | 51.42 | 52.15 | 52.31 | 50.48 |
| $MgO$ | 14.39 | 14.62 | 14.49 | 13.40 |
| $CaO$ | 0.11 | 0.14 | 0.17 | 0.15 |
| $(Na,K)_2O$ | 0.19 | 0.17 | 0.16 | 0.17 |

Tabelle 3

| WAK der Ansätze vor und nach erfindungsgemäßer Aufbereitung (20-1000 °C) | | | | | | | | |
|---|---|---|---|---|---|---|---|---|
| | D | C | B | E | A | F | G | H |
| vor | $0,85 \cdot 10^{-6}/K$ | 0,95 | 0,95 | 1,20 | 1,05 | 1,25 | 1,16 | 1,09 |
| nach | 0,66 | 0,77 | 0,74 | 0,60 | 0,81 | 0,88 | 0,79 | 0,69 |

EP 0 332 984 B1

Tabelle 4

| WAK (20-1000 °C) von isostatisch gepreßten Zylindern | | | | |
|---|---|---|---|---|
| Messung | A | A* | B | B* |
| in Achsrichtung (= Z) | $1,22 \cdot 10^{-6}$/K | 0,93 | 1,21 | 1,04 |
| senkrecht zu Z (= X) | 1,18 | 0,95 | 1,20 | 1,08 |
| senkrecht Zu Z und X | 1,20 | 0,87 | 1,23 | 1,02 |

**Patentansprüche**
**Patentansprüche für folgende Vertragsstaaten : DE, FR, GB**

1. Verfahren zur Herstellung von Formkörpern aus Cordierit mit Wärmeausdehnungskoeffizienten in allen drei aufeinander senkrecht stehenden Raumrichtungen von maximal $1,1 \cdot 10^{-6}$/°C, gemessen im Intervall zwischen 20 und 1000 °C, wobei man einen Ansatz, der die Cordierit-Zusammensetzung ergibt und der Ton und/oder Kaolin sowie Speckstein und/oder Talk, ferner Wasser und ein organisches Hilfsmittel für die Verformung der Zusammensetzung enthält, einer scherenden Mischung unterwirft, zu einem Formkörper verformt und den Formkörper bis zur Entstehung der Cordierit-Phase brennt, dadurch gekennzeichnet, daß man den Ansatz zwischen 2 Körper geringen Abstandes bringt, die sich gegeneinander bewegen und gleichzeitig den Ansatz einer Scherbelastung aussetzt.

2. Verfahren nach Anspruch 1, dadurch gekennzeichnet, daß der Ansatz soviel Wasser enthält, daß die Masse knetbar ist.

3. Verfahren nach Anspruch 1, dadurch gekennzeichnet, daß man den Ansatz in den Spalt einfüllt, der von 2 einander fast berührenden zylinderförmigen Scherwalzen gebildet wird, die mit unterschiedlicher Geshwindigkeit rotieren.

4. Verfahren nach Anspruch 3, dadurch gekennzeichnet, daß die Scherwalzen horizontal angeordnet sind.

5. Verfahren nach Anspruch 3, dadurch gekennzeichnet, daß die beiden Scherwalzen gegenläufig arbeiten.

6. Verfahren nach Anspruch 3, dadurch gekennzeichnet, daß die beiden Scherwalzen Schernuten aufweisen, die mit konstantem Steigungswinkel gewindeförmig den Mantel der Zylinder umlaufen.

7. Verfahren nach Anspruch 6, dadurch gekennzeichnet, daß die beiden Walzen ohne Gangverzahnung nebeneinander liegen.

8. Verfahren nach Anspruch 1, dadurch gekennzeichnet, daß man den Ansatz in den Spalt bringt, der von zwei rotierenden konzentrisch angeordneten runden Scheiben gebildet wird.

9. Verfahren nach Anspruch 1, dadurch gekennzeichnet, daß man den der scherenden Mischung unterworfenen Ansatz isostatisch verformt.

10. Isostatisch gepreßter Formkorper aus Cordierit mit einem Wärmeausdehnungskoeffizient in mindesten eine Richtung von maximal $1,1 \cdot 10^{-6}$/°C (gemessen im Intervall von 20 bis 1000 °C), dadurch gekennzeichnet, daß der Wärmeausdehnungskoeffizient in allen drei aufeinander senkrecht stehenden Richtungen maximal $1,1 \cdot 10^{-6}$/°C beträgt.

11. Formkörper nach Anspruch 10, dadurch gekennzeichnet, daß der Wärmeausdehnungskoeffizient in allen drei aufeinander senkrecht stehenden Richtungen im Bereich von 0,6 bis $1,1 \cdot 10^{-6}$/°C liegt.

7

EP 0 332 984 B1

**Patentansprüche für folgenden Vertragsstaat : ES**

1. Verfahren zur Herstellung von Formkörpern aus Cordierit mit Wärmeausdehnungskoeffizienten in allen drei aufeinander senkrecht stehenden Raumrichtungen von maximal $1,1 \cdot 10^{-6}/°C$,gemessen im Intervall zwischen 20 und 1000°C, wobei man einen Ansatz, der die Cordierit-Zusammensetzung ergibt und der Ton und/oder Kaolin sowie Speckstein und/oder Talk, ferner Wasser und ein organisches Hilfsmittel für die Verformung der Zusammensetzung enthält, einer scherenden Mischung unterwirft, zu einem Formkörper verformt und den Formkörper bis zur Entstehung der Cordierit-Phase brennt, dadurch gekennzeichnet, daß man den Ansatz zwischen 2 Körper geringen Abstandes bringt, die sich gegeneinander bewegen und gleichzeitig den Ansatz einer Scherbelastung aussetzt.

2. Verfahren nach Anspruch 1, dadurch gekennzeichnet, daß der Ansatz soviel Wasser enthalt, daß die Masse knetbar ist.

3. Verfahren nach Anspruch 1, dadurch gekennzeichnet, daß man den Ansatz in den Spalt einfüllt, der von 2 einander fast berührenden zylinderförmigen Scherwalzen gebildet wird, die mit unterschiedlicher Geschwindigkeit rotieren.

4. Verfahren nach Anspruch 3, dadurch gekennzeichnet, daß die Scherwalzen horizontal angeordnet sind.

5. Verfahren nach Anspruch 3, dadurch gekennzeichnet, daß die beiden Scherwalzen gegenläufig arbeiten.

6. Verfahren nach Anspruch 3, dadurch gekennzeichnet, daß die beiden Scherwalzen Schernuten aufweisen, die mit konstantem Steigungswinkel gewindeförmig den Mantel der Zylinder umlaufen.

7. Verfahren nach Anspruch 6, dadurch gekennzeichnet, daß die beiden Walzen ohne Gangverzahnung nebeneinander liegen.

8. Verfahren nach Anspruch 1, dadurch gekennzeichnet, daß man den Ansatz in den Spalt bringt, der von zwei rotierenden konzentrisch angeordneten runden Scheiben gebildet wird.

9. Verfahren nach Anspruch 1, dadurch gekennzeichnet, daß man den der scherenden Mischung unterworfenen Ansatz isostatisch verformt.

**Claims**
**Claims for the following Contracting States : DE, FR, GB**

1. A process for producing moldings composed of cordierite, having coefficients of thermal expansion of at most $1.1 \times 10^{-6}/°C$, measured in the interval between 20 and 1,000°C, in all those mutually perpendicular spatial directions, in which a batch, which gives the composition of cordierite and contains clay and/or kaolin as well as soapstone and/or talc and also water and an organic aid for deforming the composition, is subjected to shear mixing and formed to give a molding, and the molding is fired until the cordierite phase is formed, which comprises placing the batch between 2 bodies, which are at a small distance and move relative to one another, and at the same time subjecting the batch to a shear stress.

2. The process as claimed in claim 1, wherein the batch contains such a quantity of water that the mass can be kneaded.

3. The process as claimed in claim 1, wherein the batch is filled into the gap formed by 2 almost touching cylindrical shear rollers which rotate at different speeds.

4. The process as claimed in claim 3, wherein the shear rollers are arranged horizontally.

5. The process as claimed in claim 3, wherein the two shear rollers run in opposite directions.

8

6. The process as claimed in claim 3, wherein the two shear rollers have shear grooves which run like a screw thread at constant pitch angle around the shell of the cylinders.

7. The process as claimed in claim 6, wherein the two rollers are located side by side without intermeshing.

8. The process as claimed in claim 1, wherein the batch is placed into the gap formed by two rotating, concentrically arranged circular disks.

9. The process as claimed in claim 1, wherein the batch, which has been subjected to shear mixing, is deformed isostatically.

10. An isostatically pressed molding composed of cordierite, having a coefficient of thermal expansion of at most $1.1 \times 10^{-6}/°C$ (measured in the interval from 20 to $1,000°C$) in at least one direction, wherein the coefficient of thermal expansion is at most $1.1 \times 10^{-6}/°C$ in all three mutually perpendicular directions.

11. The molding as claimed in claim 10, wherein the coefficient of thermal expansion is within the range from 0.6 to $1.1 \times 10^{-6}/°C$ in all three mutually perpendicular directions.

**Claims for the following Contracting State : ES**

1. A process for producing moldings composed of cordierite, having coefficients of thermal expansion of at most $1.1 \times 10^{-6}/°C$, measured in the interval between 20 and $1,000°C$, in all those mutually perpendicular spatial directions, in which a batch, which gives the composition of cordierite and contains clay and/or kaolin as well as soapstone and/or talc and also water and an organic aid for deforming the composition, is subjected to shear mixing and formed to give a molding, and the molding is fired until the cordierite phase is formed, which comprises placing the batch between 2 bodies, which are at a small distance and move relative to one another, and at the same time subjecting the batch to a shear stress.

2. The process as claimed in claim 1, wherein the batch contains such a quantity of water that the mass can be kneaded.

3. The process as claimed in claim 1, wherein the batch is filled into the gap formed by 2 almost touching cylindrical shear rollers which rotate at different speeds.

4. The process as claimed in claim 3, wherein the shear rollers are arranged horizontally.

5. The process as claimed in claim 3, wherein the two shear rollers run in opposite directions.

6. The process as claimed in claim 3, wherein the two shear rollers have shear grooves which run like a screw thread at constant pitch angle around the shell of the cylinders.

7. The process as claimed in claim 6, wherein the two rollers are located side by side without intermeshing.

8. The process as claimed in claim 1, wherein the batch is placed into the gap formed by two rotating, concentrically arranged circular disks.

9. The process as claimed in claim 1, wherein the batch, which has been subjected to shear mixing, is deformed isostatically.

**Revendications**
**Revendications pour les Etats contractants suivants : DE, FR, GB**

1. Procédé pour fabriquer des corps moulés en cordiérite possédant des coefficients de dilatation thermique dans les trois directions de l'espace perpendiculaires entre elles, égaux au maximum à $1,1 \times 10^{-6}/°C$, mesurées dans l'intervalle compris entre 20 et $1000°C$, selon lequel on soumet à un mélange avec application d'un cisaillement une charge, qui fournit la composition de cordiérite et contient de l'argile et/ou du kaolin ainsi que de la stéatite et/ou du talc, et en outre de l'eau et une substance auxiliaire organique pour la mise en forme de la composition, on le moule pour obtenir un corps moulé et on cuit le corps moulé jusqu'à ce qu'apparaisse la phase de cordiérite, caractérisé en ce qu'on introduit la charge entre 2 corps séparés par une faible distance, que l'on déplace l'un par rapport à l'autre en soumettant simultanément la charge à une contrainte de cisaillement.

2. Procédé selon la revendication 1, caractérisé en ce que la charge contient suffisamment d'eau pour que la masse puisse être pétrie.

3. Procédé selon la revendication 1, caractérisé en ce qu'on introduit la charge dans la fente, qui est délimitée par deux rouleaux cylindriques de cisaillement qui se touchent presque et tournent à des vitesses différentes.

4. Procédé selon la revendication 3, caractérisé en ce que les rouleaux de cisaillement sont horizontaux.

5. Procédé selon la revendication 3, caractérisé en ce que les deux rouleaux de cisaillement travaillent en des sens opposés.

6. Procédé selon la revendication 3, caractérisé en ce que les deux rouleaux de cisaillement possèdent des rainures de cisaillement, qui s'étendent avec une forme hélicoïdale à pas constant sur l'enveloppe du cylindre.

7. Procédé selon la revendication 6, caractérisé en ce que les deux rouleaux sont disposés côte-à-côte sans engrènement.

8. Procédé selon la revendication 1, caractérisé en ce qu'on introduit la charge dans la fente, qui est délimitée par deux disques circulaires rotatifs concentriques.

9. Procédé selon la revendication 1, caractérisé en ce qu'on réalise un moulage isostatique de la charge soumise au mélange avec cisaillement.

10. Corps moulé formé par pressage isostatique de cordiérite possédant un coefficient de dilatation thermique dans au moins une direction, égal au maximum à $1,1 \cdot 10^{-6}/°C$ (mesuré dans l'intervalle de 20 à 1000°C), caractérisé en ce que le coefficient de dilatation thermique dans les trois directions perpendiculaires entre elles est égal au maximum à $1,1 \times 10^{-6}/°C$.

11. Corps moulé suivant la revendication 10, caractérisé en ce que le coefficient de dilatation thermique dans les trois directions perpendiculaires entre elles se situe dans la gamme allant de 0,6 à $1,1 \times 10^{-6}/°C$.

**Revendications pour l'Etat contractant suivant : ES**

1. Procédé pour fabriquer des corps moulés en cordiérite possédant des coefficients de dilatation thermique dans les trois directions de l'espace perpendiculaires entre elles, égaux au maximum à $1,1 \times 10^{-6}/°C$, mesurées dans l'intervalle compris entre 20 et 1000°C, selon lequel on soumet à un mélange avec application d'un cisaillement une charge, qui fournit la composition de cordiérite et contient de l'argile et/ou du kaolin ainsi que de la stéatite et/ou du talc, et en outre de l'eau et une substance auxiliaire organique pour la mise en forme de la composition, on le moule pour obtenir un corps moulé et on cuit le corps moulé jusqu'à ce qu'apparaisse la phase de cordiérite, caractérisé en ce qu'on introduit la charge entre 2 corps séparés par une faible distance, que l'on déplace l'un par rapport à l'autre en soumettant simultanément la charge à une contrainte de cisaillement.

2. Procédé selon la revendication 1, caractérisé en ce que la charge contient suffisamment d'eau pour que la masse puisse être pétrie.

3. Procédé selon la revendication 1, caractérisé en ce qu'on introduit la charge dans la fente, qui est délimitée par deux rouleaux cylindriques de cisaillement qui se touchent presque et tournent à des vitesses différentes.

4. Procédé selon la revendication 3, caractérisé en ce que les rouleaux de cisaillement sont horizontaux.

5. Procédé selon la revendication 3, caractérisé en ce que les deux rouleaux de cisaillement travaillent en des sens opposes.

6. Procédé selon la revendication 3, caractérisé en ce que les deux rouleaux de cisaillement possèdent des rainures de cisaillement, qui s'étendent avec une forme hélicoïdale à pas constant sur l'enveloppe du cylindre.

7. Procédé selon la revendication 6, caractérisé en ce que les deux rouleaux sont disposés côte-à-côte sans engrènement.

8. Procédé selon la revendication 1, caractérisé en ce qu'on introduit la charge dans la fente, qui est délimitée par deux disques circulaires rotatifs concentriques.

9. Procédé selon la revendication 1, caractérisé en ce qu'on réalise un moulage isostatique de la charge soumise au mélange avec cisaillement.

FIG.1

EP 0 332 984 B1

FIG. 2